Europäisches Patentamt

European Patent Office

Office européen des brevets

(19)

(11) Numéro de publication: **0 182 707**
**B1**

(12) ## FASCICULE DE BREVET EUROPEEN

(45) Date de publication du fascicule du brevet:
**14.06.89**

(51) Int. Cl.⁴: **H 04 M 9/00**

(21) Numéro de dépôt: **85402181.3**

(22) Date de dépôt: **12.11.85**

(54) Système numérique de téléphonie et de transmission de données.

(30) Priorité: **16.11.84 FR 8417562**

(43) Date de publication de la demande:
**28.05.86 Bulletin 86/22**

(45) Mention de la délivrance du brevet:
**14.06.89 Bulletin 89/24**

(84) Etats contractants désignés:
**DE GB IT**

(56) Documents cités:
**FR-A- 2 054 898**
**FR-A- 2 297 523**

**GEC JOURNAL OF SCIENCE AND TECHNOLOGY, vol.
46, no. 1, 1980, pages 19-24, Londres, GB; P. BYLANSKI
et al.: "The digital telephone"**

(73) Titulaire: **THOMSON-CSF, 51, Esplanade du Général de
Gaulle, F-92800 Puteaux (FR)**

(72) Inventeur: **Leclerc, Bruno, THOMSON-CSF SCPI 173, bld
Haussmann, F-75379 Paris Cedex 08 (FR)**
Inventeur: **Albarello, Alain, THOMSON-CSF SCPI 173, bld
Haussmann, F-75379 Paris Cedex 08 (FR)**

(74) Mandataire: **Turlèque, Clotilde et al, THOMSON-CSF
SCPI, F-92045 PARIS LA DEFENSE CEDEX 67 (FR)**

ACTORUM AG

## Description

L'invention concerne un système numérique de téléphonie et de transmission de données pour relier les membres d'un équipage entre eux et leur permettre d'utiliser à distance des émetteurs-récepteurs radio et des équipements informatiques.

Un téléphone de bord classique, pour un véhicule blindé par exemple, comporte autant de postes satellites qu'il y a de membres d'équipage, et comporte un poste central relié par des câbles à chacun des postes satellites, au réseau d'alimentation du véhicule, et aux émetteurs-récepteurs radio de ce véhicule. Chaque poste satellite comprend un casque d'écouteurs et un microphone reliés, par un cordon spiralé et un connecteur, à un boîtier appelé «plastron», fixé sur la poitrine de l'opérateur. Chaque plastron est relié par un cordon spiralé à un connecteur fixé sur le véhicule et ce connecteur est relié au poste central.

Classiquement chaque plastron comporte un commutateur rotatif permettant de sélectionner l'une des fonctions du téléphone: la conférence entre les membres de l'équipage; la conférence plus l'écoute d'un récepteur radio; ou la conférence plus l'écoute simultanée de tous les récepteurs radio du véhicule. Le plastron comporte en outre un bouton de réglage du niveau d'écoute et un commutateur manuel d'alternat des émetteurs radio. La liaison entre chaque plastron et le poste central est réalisée par un câble et des connecteurs comportant une quinzaine de conducteurs car les liaisons sont réalisées de point à point par des conducteurs. Les câbles et les connecteurs sont de qualité militaire et déterminent en grande partie le prix de fabrication du téléphone. En outre, un tel téléphone ne permet pas de réaliser des commandes supplémentaires à partir des plastrons sans augmenter exagérement le nombre de conducteurs de tous les câbles et de tous les connecteurs.

Une solution connue pour résoudre ce problème consiste à relier chaque poste satellite au poste central par une simple ligne bifilaire et à superposer sur cette ligne: une tension d'alimentation; des signaux audio; et des signaux supra-audio de télécommande. Cette solution peut être mise en œuvre au moyen de circuits intégrés qui sont conçus pour les installations téléphoniques où la numérotation est transmise par un code multifréquence. Le code multifréquence utilisé dans ce cas est situé dans le domaine des fréquences supra-audio. Un tel téléphone de bord, permettant de transmettre aussi des télécommandes, est décrit dans la demande de brevet français FR-A-2 559 975, publié le 23.8.1985, déposée par la Demanderesse. Le poste central comporte une matrice de commutation spatiale qui est commandée par des moyens de décodage des télécommandes.

Cette solution a pour inconvénient une limitation du nombre des télécommandes possibles, et surtout l'absence d'une transmission de données, car les procédures classiques de transmission de données ne sont pas facilement compatibles avec la procédure de codage multifréquence utilisée pour transmettre les télécommandes.

Le brevet français 2 054 898 décrit un système connu, dans lequel chaque poste satellite est relié au poste central par trois lignes coaxiales. Sur une première ligne coaxiale, les divers signaux vocaux sont multiplexés temporellement pour être envoyés vers le poste secondaire. Sur une deuxième ligne coaxiale le signal vocal, et plusieurs signaux de télécommande constitués chacun d'un niveau binaire permanent, sont multiplexés temporellement pour être envoyés vers le poste central. Cette solution a pour inconvénient une limitation du nombre de télécommandes possibles, et il n'est pas prévu de transmettre des données. En outre, il serait souhaitable de réduire encore plus le nombre de lignes reliant chaque poste secondaire au poste central, pour simplifier le câblage.

Les équipements militaires modernes nécessitent souvent des transmissions de données, par exemple à l'intérieur d'un véhicule pour lire et pour régler à distance la fréquence d'accord d'un émetteur-récepteur radio ou pour entrer des données dans un calculateur de bord. Il est donc souhaitable que chaque poste satellite permette d'émettre et de recevoir des données selon les procédures de transmission classique en informatique, en plus de la transmission des signaux vocaux classiques et de la commande de l'alternat des émetteurs-récepteurs radio.

En outre, pour les raisons indiquées précédemment, il est souhaitable que chaque poste satellite soit relié au poste central par une simple ligne téléphonique constituée d'une paire de conducteurs blindée. Il est connu de réaliser des centraux téléphoniques de grosse capacité acheminant simultanément des données binaires et des signaux vocaux codés par une modulation à impulsions codées (MIC). De tels centraux sont trop complexes, et donc trop coûteux, pour être utilisés dans l'application envisagée ici et qui ne comporte que quelques postes satellites. D'autre part, cette application comporte des aspects particuliers qui la distingue de la téléphonie classique, notamment l'utilisation des émetteurs-récepteurs radio par l'intermédiaire du système.

L'objet de l'invention est un système numérique simple et peu coûteux qui réalise ces fonctions en mettant en œuvre le procédé de modulation à impulsions codées (MIC) pour transmettre les signaux vocaux et les données, et le procédé de multiplexage-démultiplexage temporel pour les aiguiller.

Selon l'invention, un système numérique de téléphonie et de transmission de données comporte une pluralité de postes satellites couplés à un poste central, les postes satellites comportant des moyens pour émettre, et recevoir, des signaux vocaux et des données, et pour émettre en direction du poste central des signaux de télécommande; et le poste central comportant:

— des moyens de décodage des signaux de télécommande;

— des moyens de multiplexage-démultiplexage temporel commandés par les moyens de décodage des signaux de télécommande, pour diriger les signaux vocaux et les signaux de données, vers les postes satellites selon les signaux de télécommande;

et est caractérisé en ce que les signaux de télécommande, les signaux vocaux, et les signaux de données sont des signaux binaires transmis en série selon un format normalisé pour la transmission téléphonique par modulation à impulsions codées (MIC).

L'invention sera mieux comprise et d'autres détails apparaîtront à l'aide de la description suivante et des figures l'accompagnant:

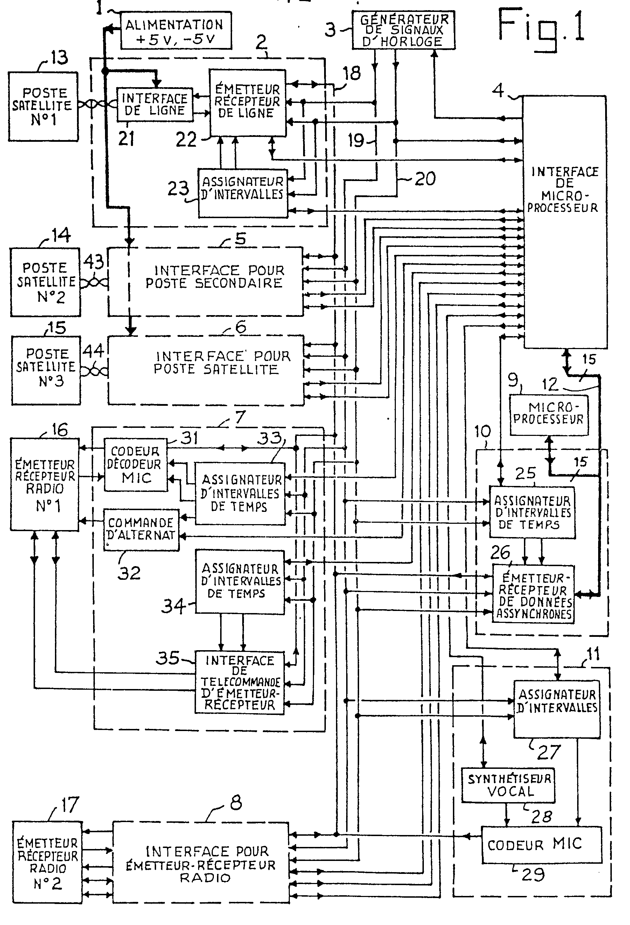

– la figure 1 représente le schéma synoptique d'un exemple de réalisation du système selon l'invention;

– la figure 2 représente le schéma synoptique plus détaillé d'un poste satellite appartenant à cet exemple de réalisation.

Cet exemple de réalisation comporte trois postes satellites 13, 14, 15 et deux émetteurs-récepteurs radio 16 et 17, reliés à un poste central. Les postes satellites sont situés à divers endroits relativement éloignés du poste central alors que les émetteurs-récepteurs radio sont situés à proximité de celui-ci. Le poste central comporte: une alimentation 1; trois interfaces pour postes satellites 2, 5, 6; deux interfaces pour émetteur-récepteur radio 7 et 8; un générateur de signaux d'horloge 3; une interface 4 de microprocesseur; un microprocesseur 9; une interface 10 pour les données de commande du poste central; et un dispositif 11 générateur d'ordres vocaux.

Chaque poste satellite 13, 14 ou 15 peut réaliser les fonctions suivantes: l'émission ou la réception d'un signal vocal en provenance ou en direction d'un autre ou de plusieurs autres satellites du système ou d'un émetteur-récepteur radio 16 ou 17; l'émission ou la réception de données, notamment pour régler la fréquence des émetteurs-récepteurs radio et pour afficher la valeur de cette fréquence sur un poste satellite; la télécommande du poste central pour sélectionner les liaisons à établir entre les différents éléments du système; la télécommande de l'alternat des émetteurs-récepteurs radio 16 et 17.

D'autre part, l'un des postes satellites 13, 14 ou 15 comporte un dispositif de transmission d'ordres permettant de télécommander le générateur 11 pour émettre par synthèse vocale des ordres prédéterminés, en direction de l'un ou de plusieurs des postes satellites. Cette transmission d'ordres par synthèse vocale est applicable notamment dans les véhicules blindés pour permettre une meilleure compréhension des ordres envoyés à un ou plusieurs membres d'équipage lorsque le bruit ambiant est très élevé. Dans ce cas, un ordre transmis d'une façon classique par un microphone est perturbé par le bruit et risque donc d'être mal compris, alors qu'un ordre transmis par synthèse vocale n'est pas perturbé à sa source par le bruit ambiant.

Chacun des postes satellites 13, 14 et 15, est relié au poste central par une simple ligne bifilaire blindée 42, 43, 44, assurant la transmission des signaux vocaux et des signaux de données dans les deux sens, et assurant l'alimentation des postes satellites. Chacune de ces lignes aboutit dans le poste central à une interface pour poste satellite, respectivement 2, 5, et 6. Ces interfaces pour postes satellites reçoivent chacune des tensions d'alimentation +5 V et −5 V fournies par l'alimentation 1 et destinées à alimenter en énergie les postes satellites 13, 14 et 15.

Les émetteurs-récepteurs radio 16 et 17 sont reliés chacun à une interface pour émetteur-récepteur radio, respectivement 7 et 8, située dans le poste central. Cette liaison est assurée par: deux lignes monodirectionnelles transmettant chacune un signal vocal; une ligne de commande d'alternat, et deux lignes bidirectionnelles de transmission de données pour télécommander notamment la fréquence d'accord. Les interfaces 2, 5, 6, 7, 8 et 10, possèdent chacune une entrée-sortie et deux entrées, reliées respectivement à un bus 18 de transmission série de données, un bus 19 distribuant un signal d'horloge à une fréquence de 2,048 MHz, et à un bus 20 de distribution d'un signal d'horloge à une fréquence de 8 KHz. Ces deux derniers bus sont reliés respectivement à deux sorties du générateur 3 de signaux d'horloge. Une entrée d'initialisation du générateur 3 est reliée à une sortie de l'interface 4. Une entrée de l'interface 4 est reliée à la ligne bus 20 pour recevoir le signal d'horloge à la fréquence de 8 KHz. Le bus 18 transmet des trames de durée 125 microsecondes, correspondant à la fréquence d'horloge de 8 KHz, ces trames étant constituées de 32 sous-trames de huit bits dont la durée correspond à la fréquence de 2,048 MHz.

L'interface du microprocesseur 4 possède: huit entrée-sorties reliées par paires respectivement aux interfaces 2, 5, 6, 7, 8, et au générateur 11; six entrées-sorties reliées par triplet aux interfaces 7 et 8 respectivement; et une entrée-sortie reliée à l'interface 10. D'autre part, l'interface 4 possède une entrée-sortie de données reliées par un bus de données et d'adresses 12, comportant 15 bits, au microprocesseur 9. Ce même bus 12 relie le microproceseur 9 à l'interface 10 pour les données de commande du poste central. Le générateur 11 possède deux entrées reliées aux bus de distribution d'horloge 19 et 20, et une sortie reliée au bus de données 18.

Les interfaces 2, 5, 6 pour poste satellite sont toutes identiques. Par exemple, l'interface 2 comporte une interface de ligne 21, un émetteur-récepteur de ligne 22, et un assignateur 23 d'intervalles de temps. L'interface de ligne 21 possède deux entrées flottantes reliées à la ligne bifilaire 42 de liaison au poste satellite 13, et possède une entrée multiple reliée à une sortie multiple de l'alimentation 1 pour recevoir les tensions d'alimentation +5 V et −5 V. L'interface 21 est reliée au récepteur de ligne 22 par deux lignes, l'une transmettant un signal émis par le poste satellite 13, et l'autre transmettant un signal à destination de ce poste satellite. L'interface 21 assure la conversion deux fils-quatre fils, classique en téléphonie, et assure la fourniture des tensions d'alimentation nécessaires pour le poste satellite 13. Elle peut être constituée d'un transformateur classique ou un circuit intégré du type MC3419 de MOTOROLA.

L'émetteur-récepteur de ligne 22 comporte une entrée-sortie reliée au bus de données 18, deux entrées d'horloge reliées respectivement aux bus de distribution d'horloge 19 et 20, une entrée-sortie reliée à une entrée-sortie de l'interface 4 du microprocesseur, et deux entrées de validation reliées respectivement à deux sorties de l'assignateur 23 d'intervalles de temps. L'assignateur 23 possède en outre une entrée-sortie reliée à une entrée-sortie de l'interface 4, et deux entrées d'horloge reliées respectivement aux bus 19 et 20.

Les signaux émis et reçus par les postes satellites 13, 14 et 15 sont des trames binaires de 10 bits transmises sur les lignes bifilaires 42, 43, 44 par une modulation différentielle de phase. Quand un signal est reçu au poste central, l'émetteur-récepteur de ligne 22 démodule ce signal et fournit sous forme série une suite de sous-trames de huit bits au bus 18. Ces trames sont au format normalisé du procédé de modulation à impulsions codées (MIC) utilisé classiquement en téléphonie numérique. Chaque sous-trame échangée entre un poste secondaire et le poste central comporte deux bits dits bits de signalisation, qui sont utilisés classiquement pour la signalisation téléphonique, et huit bits qui sont utilisés classiquement pour transmettre la valeur d'un échantillon de signal vocal. Dans le système selon l'invention, les deux bits de signalisation sont utilisés pour transmettre des données, notamment des données pour commander le poste central, et les huit bits sont utilisés pour transmettre soit un signal vocal codé, soit des données.

Dans le poste central la commutation est réalisée par un multiplexage-démultiplexage temporel sur le bus 18. Les trames en provenance de chaque poste satellite sont appliquées sur le bus 18 à des instants bien déterminés, ayant une période de 125 microsecondes. Pendant chacune de ces périodes 32 trames peuvent être appliquées successivement sur le bus 18 par les diverses interfaces 2, 5, 6, 7, 8 et 10, et éventuellement d'autres interfaces jusqu'à un nombre de 32. Dans chacune de ces interfaces un assignateur d'intervalles de temps, tel que l'assignateur 23, valide un dispositif relié au bus 18, tel que l'émetteur-récepteur 22, pour émettre ou recevoir une trame pendant un intervalle de temps bien déterminé. Chaque liaison entre un poste satellite et un autre poste satellite, ou bien un émetteur-récepteur radio, ou le générateur 11, ou l'interface 10, se voit attribuer l'un des intervalles de temps correspondant aux 32 intervalles de temps contenus dans une période de 125 microsecondes.

L'attribution de chacun de ces intervalles de temps est réalisée par le microprocesseur 9 et son interface 4 qui sélectionnent un numéro d'ordre compris entre 0 et 31 et qui fournissent ce numéro d'ordre à l'assignateur d'intervalles de temps que comporte chacune des interfaces 2 à 8, 10 et le générateur 11. Il y a un numéro d'ordre distinct pour chaque sens de la liaison. Chaque assignateur d'intervalles de temps stocke les deux valeurs de numéros d'ordre correspondant aux deux sens de la liaison dont il s'occupe, si cette liaison est bilatérale. Ces deux valeurs sont transmises sous forme série par la ligne bidirectionnelle reliant l'interface 4 à l'assignateur. L'assignateur accuse réception en envoyant un signal à l'interface 4 sur la même ligne.

Chaque assignateur comporte un compteur actionné par les signaux d'horloge et comporte deux comparateurs pour détecter la coïncidence entre le numéro d'ordre affecté à chaque sens de la liaison et la valeur contenue dans le compteur. Dans l'exemple de l'interface 2 une sortie de l'assignateur 23 commande l'émetteur-récepteur de ligne 22 pour appliquer sur le bus 18 une sous-trame de huit bits constituée à partir du signal transmis par le poste satellite 13. Une seconde sortie de l'assignateur 23 commande l'émetteur-récepteur de ligne 22 pour qu'il lise une sous-trame de huit bits sur le bus 18 et pour qu'il transmette ces huit bits sous la forme d'une modulation différentielle de phase en direction du poste satellite 13, en ajoutant deux bits de signalisation. Par exemple, ces deux bits permettent de transmettre des données en même temps qu'un signal vocal est transmis par les huit bits.

Les numéros d'ordre sont choisis par le microprocesseur 9 en fonction de commandes transmises au poste central par les postes satellites, soit sous la forme de deux bits de signalisation incorporés à chaque trame de signal vocal ou de données, soit sous la forme des huit bits constituant une trame de données adressées à l'interface 10. Les deux bits de signalisation accompagnant chaque trame de signal vocal sont transmis à l'interface 4 par la ligne bidirectionelle qui la relie à chaque émetteur-récepteur de ligne.

Les sous-trames constituées de huit bits de données sont adressées à l'interface 10. Celle-ci comporte un assignateur d'intervalles de temps 25 et un émetteur-récepteur de données asynchrones 26. L'émetteur récepteur 26 est relié aux bus 19 et 20 de distribution des signaux d'horloge, au bus de données 18, au bus d'adresses et de données 12 du microprocesseur 9, et à deux sorties de l'assignateur 25. Ces deux sorties commandent l'émetteur-récepteur 26 pour lire ou appliquer une sous trame de huit bits sur le bus 18. L'assignateur d'intervalles de temps 25 est relié aux bus 19 et 20 et à une entrée-sortie de l'interface 4. L'interface 10 participe au multiplexage-démultiplexage temporel de la même façon que les autres interfaces et est capable aussi bien de recevoir des données que d'en émettre sur le bus 18.

Le générateur 11 comporte un assignateur 27 d'intervalles de temps, un synthétiseur vocal 28, et un codeur MIC 29. L'assignateur 27 possède une entrée-sortie reliée à l'interface 4 qui lui fournit un numéro d'ordre désignant un intervalle de temps pendant lequel le codeur MIC 29 peut émettre une trame sur le bus 18. L'assignateur 27 possède deux entrées reliées respectivement aux bus de distribution d'horloge 19 et 20 et possède une sortie fournissant un signal de validation au codeur 29. Le codeur 29 possède une entrée de signal vocal numérique relié à une sortie du synthétiseur vocal 28. Le synthétiseur vocal 28 possède, dans une mémoire, des données permettant de synthétiser un certain nombre d'ordres prédéterminés. Chaque ordre est désigné par un mot binaire fourni à une entrée-sortie du synthétiseur 28, sous la forme série, par une entrée-sortie de l'interface 4, lorsque le microprocesseur 9 reçoit via l'interface 10 des données émises par un poste satellite et qui correspondent à la transmission d'un ordre vocal synthétisé.

Les interfaces 7 et 8 pour émetteur-récepteur radio sont identiques. Par exemple, l'interface 7 comporte: un codeur-décodeur MIC 31; un dispositif 32 de commande d'alternat; deux assignateurs d'intervalles de temps 33 et 34; et une interface 35 de télécommande d'émetteur-récepteur. L'assignateur 33 possède: une sortie reliée à une entrée de validation de la partie codeur du codeur-décodeur 31, une sortie reliée à une entrée de validation de la partie décodeur du codeur-décodeur 31, et une sortie reliée à une entrée de commande du dispositif 32. L'assignateur 33 valide la partie décodeur lorsqu'il y a sur le bus 18 une trame qui doit être décodée pour constituer un signal vocal à transmettre par l'émetteur-récepteur radio 16. L'assignateur 33 valide la partie codeur lorsque le bus 18 est prêt à recevoir une trame obtenue par le codage d'un signal vocal fourni par l'émetteur-récepteur radio 16.

Les assignateurs 33 et 34 possèdent chacun: une entrée-sortie reliée respectivement à une entrée-sortie de l'interface 4 et deux entrées de signaux d'horloge reliées respectivement aux bus 19 et 20.

Le dispositif 32 de commande d'alternat possède une entrée-sortie reliée à une entrée-sortie de l'interface 4 pour recevoir un signal de commande d'alternat généré par l'interface 4 et le microprocesseur 9 en fonction des données reçues par l'interface de données de commande 10. Il possède aussi une entrée reliée à une sortie de l'assignateur 33 et permettant de commander automatiquement l'alternat en émission lorsque des trames de signaux vocaux sont envoyées par un poste satellite, à destination de l'émetteur-récepteur 16.

L'assignateur 34 possède deux sorties de commande reliées respectivement à deux entrées de l'inferface 35 de télécommande d'émetteur-récepteur. L'interface 35 possède une entrée-sortie reliée au bus 18, deux entrées de signaux d'horloge reliées aux bus 19 et 20 respectivement, et deux entrées-sorties reliées respectivement à deux entrées-sorties de l'émetteur-récepteur radio 16 pour transmettre vers celui-ci des valeurs numériques permettant de régler notamment la fréquence d'accord, et pour transmettre vers un poste satellite des valeurs numériques traduisant notamment la fréquence d'accord obtenue. L'assignateur 34 valide l'interface 35 aux instants qui sont sélectionnés par le microprocesseur 9 pour transmettre vers le bus 18 ou en provenance du bus 18 ces données de télécommande de l'émetteur-récepteur 16.

L'utilisation du procédé MIC et du multiplexage-démultiplexage temporel selon le format normalisé pour la téléphonie permet de réaliser économiquement le système selon l'invention au moyen de circuits intégrés qui ont été conçus et commercialisés pour la téléphonie numérique classique. Les émetteurs-récepteurs de ligne, tels que l'émetteur-récepteur 22, peuvent être réalisés au moyen d'un circuit intégré du type MC145 422 fabriqué par MOTOROLA; les assignateurs d'intervalles de temps 23, 33, 34, 40, 41 peuvent être réalisés au moyen d'un circuit intégré du type MC14 416 fabriqué par MOTOROLA; et l'émetteur-récepteur de données 11 peut être réalisé au moyen d'un circuit intégré MC145 428 fabriqué par MOTOROLA. Le codeur-décodeur MIC 31 et le codeur MIC 29 sont disponibles sous la forme de circuits intégrés couramment disponibles dans le commerce.

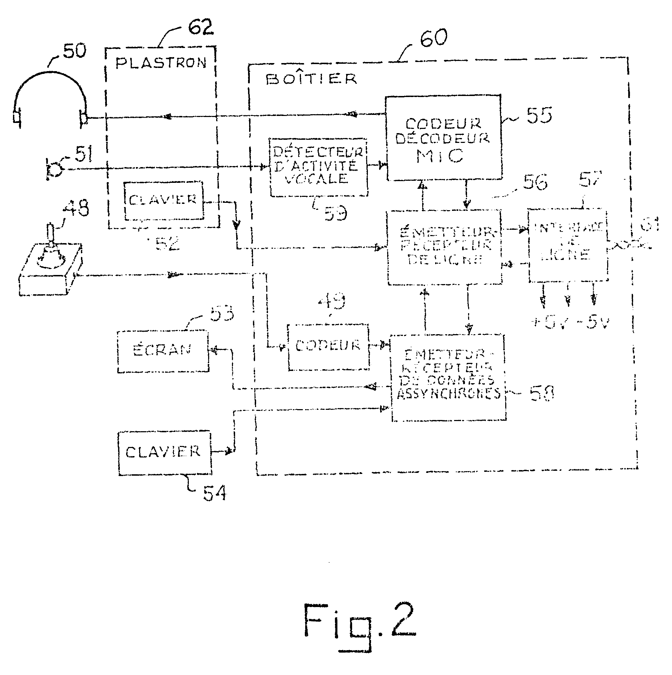

La figure 2 représente le schéma synoptique d'un exemple de réalisation d'un poste satellite particulièrement complet puisqu'il comporte la possibilité de transmettre et de recevoir des signaux vocaux, de transmettre des ordres vocaux synthétisés, et de transmettre et de recevoir des données au moyen d'un clavier alpha-numérique 54 et d'un écran de visualisation alpha-numérique 53. Les postes satellites 13, 14 et 15 ne sont pas forcément identiques et peuvent ne comporter, par exemple, que la possibilité de transmettre et de recevoir des signaux vocaux.

Cet exemple de poste satellite comprend un casque d'écouteurs 50 et un microphone 51 reliés par un cordon spiralé à un plastron porté par l'opérateur. Ce plastron comporte un petit clavier 52 destiné à commander le poste central pour établir les liaisons souhaitées par l'opérateur et commander l'alternat des émetteurs-récepteurs radio. Le plastron est relié par un cordon spiralé à un boîtier 60 fixé au véhicule et relié au poste central par une ligne bifilaire blindée. Un palonnier 48, fixé sur le véhicule, est relié au boîtier par un câble multiconducteur transmettant un mot binaire traduisant sa position.

Ce boîtier 60 comporte un détecteur d'activité vocale 59, un codeur-décodeur MIC 55, un émetteur-récepteur de ligne 56, une interface de ligne 57, et un émetteur-récepteur de données asynchrones 58. Ce boîtier 60 contient aussi un codeur 49 qui est relié au palonnier 48 et qui convertit le mot binaire parallèle fourni par ce palonnier en un mot binaire série. L'écran 53 et le clavier alpha-numérique 54 sont fixés au véhicule et sont reliés par de courtes longueurs de fils au boîtier du poste satellite.

Le casque d'écouteurs 50 est relié à une sortie du codeur-décodeur MIC 55. Le microphone 51 est relié à une entrée du détecteur d'activité vocale 59, qui a pour rôle de ne pas laisser passer le signal sonore fourni par le microphone lorsque ce signal n'est constitué que de bruit. Une sortie du détecteur d'activité vocale 59 est reliée à une entrée du codeur-décodeur 55. Le codeur-décodeur 55 est relié à l'émetteur-récepteur de ligne 56 par une paire de lignes permettant d'acheminer deux signaux sonores respectivement dans les deux sens.

Le petit clavier 52 est relié à une entrée de l'émetteur-récepteur de ligne 56. L'émetteur-récepteur de données asynchrones 58 est relié à l'émetteur-récepteur de ligne 56 par une paire de lignes assurant la transmission respectivement dans les deux sens. L'écran 53 et le clavier 54 sont reliés respectivement à une sortie et à une entrée de l'émetteur-récepteur de données asynchrones 58. Une sortie du codeur 49 est reliée à une entrée de l'émetteur-récepteur 56. Ce dernier est relié à l'interface de ligne 57 par une paire de lignes assurant la transmission respectivement dans les deux sens. L'interface de ligne 57 est reliée au poste central par une ligne bifilaire blindée 61 et, d'autre part, possède des sorties fournissant deux tensions d'alimentation +5 V et −5 V obtenues en séparant la composante continue du courant transmis sur la ligne bifilaire 61. Ces tensions d'alimentation alimentent tous les éléments du boîtier 60 du poste satellite.

Le détecteur d'activité vocale 59 peut être constitué par un dispositif de type connu tel que décrit dans le brevet français n° 2 466 825. Le codeur-décodeur MIC 55 peut être constitué par un circuit intégré couramment disponible dans le commerce pour les applications téléphoniques. L'interface de ligne 57 peut être constituée par un montage classique à transformateur. L'émetteur-récepteur de ligne 56 peut être constitué par un circuit intégré MC145 426 fabriqué par MOTOROLA. L'émetteur-récepteur de données asynchrones 58 peut être constitué par un circuit intégré MC145 428 fabriqué par MOTOROLA.

Les données fournies par le petit clavier 52 sont transmises sous la forme des deux bits de signalisation prévus dans la trame MIC normalisée pour la téléphonie numérique. Pour permettre un nombre de télécommandes supérieur à quatre, chaque télécommande est codée par les bits de signalisation de plusieurs trames successives. L'émetteur-récepteur de ligne 56 est prévu pour être relié directement à un clavier de poste téléphonique, le petit clavier 52 est donc relié à la place de celui-ci mais les données de signalisation qu'il fournit n'ont pas la fonction de numérotation classique de la téléphonie. Chaque touche de ce clavier 52 commande une fonction du système: communication avec un seul poste satellite, conférence, conférence plus écoute d'un récepteur radio, conférence plus écoute de deux récepteurs radio, alternat de l'un des émetteurs-récepteurs radio. Le microprocesseur 9 est chargé de l'interprétation des deux bits de signalisation et de la commande des commutations temporelles correspondantes.

Le clavier 54 fournit des données alpha-numériques sous une forme série asynchrone conforme à la procédure normalisée RS232 de transmission de données; de même l'écran 53 reçoit des données sous une forme série asynchrone conforme à cette procédure normalisée. L'émetteur-récepteur 58 de données asynchrones comporte des commutateurs permettant de sélectionner le format et le débit des liaisons entre l'émetteur-récepteur 58 et, d'autre part, l'écran 53 et le clavier 54.

Dans cet exemple de réalisation, le débit peut atteindre 9600 bauds. La transmission des données de l'émetteur-récepteur de données 58 à l'émetteur-récepteur de ligne 56 est réalisée sous forme série par deux lignes monodirectionnelles et l'émetteur-récepteur de ligne 56 utilise les deux bits de signalisation de chaque trame pour transmettre ces données vers le poste central. Les huit autres bits de chaque trame restent alors disponibles pour transmettre un signal sonore. Dans cet exemple de réalisation, l'émetteur-récepteur de donnée asynchrones 58 est adapté pour transmettre en outre la valeur d'un mot binaire fourni par la sortie du codeur 49 sous forme série asynchrone.

Dans une variante de réalisation, un poste satellite ne comporte pas de plastron et de palonnier, mais comporte seulement un terminal source et récepteur de données. Il est possible alors de relier l'émetteur-récepteur de données asynchrones 58 à une entrée de l'émetteur-récepteur de ligne 56 habituellement reliée à la sortie du codeur-décodeur MIC 55. Les huit bits utilisés habituellement pour la transmission d'un signal sonore sont alors utilisés pour transmettre des données.

Dans une variante de réalisation, le calculateur de bord du véhicule peut être relié au système selon l'invention pour émettre ou recevoir des données en direction ou en provenance d'un poste satellite. Ce calculateur peut être relié au bus 18 par l'intermédiaire d'un émetteur-récepteur de données asynchrones et un assignateur d'intervalles de temps analogues à ceux de l'interface 10.

L'invention ne se limite pas à l'exemple de réalisation décrit ci-dessus, il est à la portée de l'homme de l'art d'augmenter le nombre de postes satellites, le nombre d'émetteurs-récepteurs radio, et de modifier les postes satellites en fonction des informations à transmettre: signaux sonores, ordres à synthétiser, données alpha-numériques. Il est possible aussi de remplacer la liaison bifilaire entre chaque poste satellite et le poste central par une liaison au moyen de deux fibres optiques, transmettant respectivement dans les deux sens, les interfaces de ligne étant remplacées par des coupleurs électro-optiques classiques et les postes satellites étant alimentés par des alimentations distinctes de celle du poste central. Cette variante présente l'avantage d'être mieux protégée contre les interférences électromagnétiques qui sont particulièrement à craindre pour la transmission de données.

L'invention peut être appliquée aux téléphones de bord de tous les types de véhicules et aux téléphones reliant les différents cadres («shelters») d'un système d'armes.

**Revendications**

1. Système numérique de téléphonie et de transmission de données comportant une pluralité de postes satellites (13, 14, 15) couplés à un poste central (1 à 11), les postes satellites comportant des moyens (55, 56, 57) pour émettre, et recevoir, des signaux vocaux et des données, et pour émettre en direction du poste central (1 à 11) des signaux de télécommande; et le poste central (1 à 11) comportant:

– des moyens (9) de décodage des signaux de télécommande;

– des moyens de multiplexage-démultiplexage temporel (18, 23, 25) commandés par les moyens (9) de décodage des signaux de télécommande, pour diriger les signaux vocaux et les signaux de données, vers les postes satellites (13 à 15) selon les signaux de télécommande; caractérisé en ce que les signaux de télécommande, les signaux vocaux, et les signaux de données sont des signaux binaires transmis en série selon un format normalisé pour la transmission téléphonique par modulation à impulsions codées (MIC).

2. Système selon la revendication 1, comportant en outre au moins un émetteur-récepteur radio (16, 17), caractérisé en ce que le poste central (1 à 11) comporte en outre, pour chaque émetteur-récepteur radio (16 ou 17):

– des premiers moyens supplémentaires de multiplexage-démultiplexage temporel (33) pour envoyer et recevoir des signaux vocaux sous la forme d'impulsions codées au format normalisé, en direction et en provenance des postes satellites (13, 14, 15), et pour recevoir un signal de commande d'alternat sous la forme d'impulsions codées au format normalisé, en provenance des postes satellites (13, 14, 15);

– un codeur-décodeur (31) pour coder et décoder des signaux vocaux sous la forme d'impulsions codées selon le format normalisé;

– des seconds moyens supplémentaires de multiplexage-démultiplexage (34), et des moyens (35) de décodage de données en provenance d'un poste satellite (13, 14, 15), pour décoder ces données, et commander l'émetteur-récepteur (16 ou 17) en fonction de ces données.

3. Système selon la revendication 1, caractérisé en ce que, pour émettre et recevoir des signaux vocaux et des données, et pour télécommander le poste central (1 à 11) un poste satellite comporte:

– un codeur-décodeur (55) pour coder, et décoder, des signaux vocaux sous la forme d'impulsions codées selon le format normalisé pour la téléphonie, couplés à des moyens (50, 51) pour émettre et recevoir des signaux vocaux;

– une interface (58) de transmission de données, pour transférer des données d'un format classique de transmission de données au format normalisé pour la téléphonie et réciproquement, couplée à un terminal source ou récepteur de données (53, 54);

– un clavier (52) pour saisir des télécommandes;

– un émetteur-récepteur de ligne (56) couplé au codeur-décodeur (55), à l'interface de transmission de données (58) et au clavier (52), pour émettre et recevoir, en direction et en provenance du poste central (1 à 11) des signaux vocaux et des données codés au format normalisé pour la téléphonie, et pour émettre en direction du poste central (1 à 11) des signaux de télécommande codés au format normalisé pour la téléphonie.

4. Système selon la revendication 3, caractérisé en ce qu'un des postes satellites (13, 14, 15) comporte un dispositif de transmission d'ordre comportant un palonnier (48) couplé à un codeur (49) qui fournit un mot binaire fonction de la position du palonnier (48), à l'interface de transmission de données (58), et en ce que le poste central comporte en outre:

– un synthétiseur vocal (28) pour générer des ordres prédéterminés, sous la forme d'un signal vocal, commandé par les moyens (9) de décodage des signaux de télécommande;

– un codeur (29) pour coder ce signal vocal sous la forme d'impulsions codées selon le format normalisé;

– des moyens supplémentaires (27) de multiplexage-démultiplexage de ce signal vocal ainsi codé, afin de le transmettre vers au moins l'un des postes satellites (13, 14, 15).

5. Système selon la revendication 1, caractérisé en ce que chaque poste satellite (13, 14, 15) est couplé au poste central (1 à 11) par une ligne bifilaire (42, 43, 44) transmettant dans les deux sens des signaux électriques véhiculant les impulsions codées, et alimentant le poste satellite (13, 14, 15) en énergie.

6. Système selon la revendication 1, caractérisé en ce que chaque poste satellite (13, 14, 15) est couplé au poste central (1 à 11) par une paire de fibres optiques transmettant respectivement dans chaque sens les impulsions codées.

**Patentansprüche**

1. Digitales Telephon- und Datenübertragungssystem, mit einer Mehrzahl von Satellitenstationen (13, 14, 15), die an eine Zentralstation (1 bis 11) angekoppelt sind, wobei die Satellitenstationen Mittel (55, 56, 57) umfassen, um Sprachsignale sowie Daten auszusenden und zu empfangen und um Fernsteuersignale in Richtung zur Zentralstation (1 bis 11) auszusenden, wobei die Zentralstation (1 bis 11) umfasst:

– Mittel (9) zum Dekodieren der Fernsteuersignale;

– Mittel (18, 23, 25) zur zeitlichen Multiplexierung/Demultiplexierung, welche durch die Mittel (9) zum Dekodieren der Fernsteuersignale gesteuert sind, um die Sprachsignale sowie die Datensignale zu den Satellitenstationen (13 bis 15) in Abhängigkeit von den Fernsteuersignalen zu lenken; dadurch gekennzeichnet, dass die Fernsteuersignale, die Sprachsignale sowie die Datensignale Binärsignale sind, die gemäss einem Normformat für die Telephonübertragung durch Modulation in Form von kodierten Impulsen (MIC) seriell übertragen werden.

2. System nach Anspruch 1, mit ferner wenigstens einem Funk-Sende-Empfangsgerät (16, 17), dadurch gekennzeichnet, dass die Zentralstation (1 bis 11) ferner für jedes Funk-Sende-Empfangsgerät (16, 17) umfasst:

– erste zusätzliche Mittel (33) zur zeitlichen Multiplexierung/Demultiplexierung, um Sprachsignale in Form von kodierten Impulsen gemäss dem Normformat in Richtung und ausgehend von den Satellitenstationen (13, 14, 15) auszusenden bzw. zu empfangen, und um ein Wechselsteuersignal in Form von kodierten Impulsen gemäss dem Normformat ausgehend von den Satellitenstationen (13, 14, 15) zu empfangen;

– einen Kodierer/Dekodierer (31), um Sprachsignale in Form von kodierten Impulsen gemäss dem Normformat zu kodieren bzw. zu dekodieren;

– zweite zusätzliche Mittel (34) zur Multiplexierung/Demultiplexierung sowie Mittel (35) zum Dekodieren von Daten aus einer Satellitenstation (13, 14, 15), um diese Daten zu dekodieren und das Sende-Empfangsgerät (16 oder 17) in Abhängigkeit von diesen Daten zu steuern.

3. System nach Anspruch 1, dadurch gekennzeichnet, dass, um Sprachsignale sowie Daten auszusenden und zu empfangen und um die Zentralstation (1 bis 11) fernzusteuern, eine Satellitenstation umfasst:

– einen Kodierer/Dekodierer (55), um Sprachsignale in Form von kodierten Impulsen gemäss dem Normformat für die Telephonie zu kodieren und zu dekodieren, welche an Mittel (50, 51) zum Aussenden und zum Empfangen von Sprachsignalen angekoppelt sind;

– eine Schnittstelle (58) für die Datenübertragung, um Daten aus einem herkömmlichen Datenübertragungsformat in das Normformat für die Telephonie umzusetzen und umgekehrt, die an ein Quellenterminal (53) bzw. an einen Datenempfänger (54) angekoppelt ist;

– eine Tastatur (52), um Fernsteuerbefehle zu erfassen;

– ein Leitungs-Sender/Empfänger (56), der an den Kodierer/Dekodierer (55), an die Schnittstelle (58) für die Datenübertragung und an die Tastatur (52) angekoppelt ist, um in Richtung und ausgehend von der Zentralstation (1 bis 11) Sprachsignale sowie Daten, die in dem Normformat für die Telephonie kodiert sind, auszusenden bzw. zu empfangen, und um Fernsteuersignale, die in dem Normformat für die Telephonie kodiert sind, in Richtung der Zentralstation (1 bis 11) auszusenden.

4. System nach Anspruch 3, dadurch gekennzeichnet, dass eine der Satellitenstationen (13, 14, 15) eine Vorrichtung für die Befehlsübertragung umfasst, welche einen an einen Kodierer (49) angekoppelten Steuerhebel (48) umfasst, der an die Schnittstelle (58) für die Datenübertragung ein Binärwort abliefert, welches von der Stellung des Steuerhebels (48) abhängig ist, und dass die Zentralstation ferner umfasst:

– eine Sprachsynthesereinrichtung (28), um vorbestimmte Befehle in Form eines Sprachsignals zu erzeugen, die durch die Mittel (9) zum Dekodieren der Fernsteuersignale gesteuert ist;

– einen Kodierer (29), um dieses Sprachsignal in Form von kodierten Impulsen gemäss dem Fernsteuersignale zu kodieren;

– zusätzliche Mittel (27) für die Multiplexierung/Demultiplexierung dieses so kodierten Sprachsignals, um es zu wenigstens einer der Satellitenstationen (13, 14, 15) zu übertragen.

5. System nach Anspruch 1, dadurch gekennzeichnet, dass jede Satellitenstation (13, 14, 15) an die Zentralstation (1 bis 11) über eine zweidrahtige Leitung (42, 43, 44) angekoppelt ist, die in beiden Richtungen elektrische, die kodierten Impulse übertragende Signale überträgt und die Satellitenstation (13, 14, 15) mit Energie versorgt.

6. System nach Anspruch 1, dadurch gekennzeichnet, dass jede Satellitenstation (13, 14, 15) an die Zentralstation (1 bis 11) über ein Paar optischer Fasern angekoppelt ist, welche die kodierten Impulse in der jeweiligen Richtung übertragen.

**Claims**

1. A digital telephony and data transmission system comprising a plurality of satellite stations (13, 14 and 15) coupled with a central station (1 through 11), the satellite stations comprising means (55, 56 and 57) in order to transmit, and to receive, voice and data signals, and to transmit toward the central station (1 through 11) telecontrol signals; the said central station (1 through 11) comprising:

– means (9) for decoding the telecontrol signals;

– time multiplexing and demultiplexing means (18, 23 and 25) controlled by the decoding means (9) and of the telecontrol signals, in order to direct the voice and data signals towards the satellite stations (13 through 15) in accordance with the telecontrol signals; characterized in that the telecontrol signals, the voice signals and the data signals are binary signals transmitted in series in accordance with a standardized format for telephonic transmission by pulse code modulation (PCM).

2. The system as claimed in claim 1, furthermore comprising at least one radio frequency transmitter-receiver (16 and 17), characterized in that the central station (1 through 11) furthermore comprises, for each radio frequency transmitter-receiver (16 or 17):

– first supplementary means for time multiplexing and demultiplexing (33) in order to transmit and receive voice signals in the form of encoded pulses with a standardized format towards and from the satellite stations (13, 14 and 15) and in order to receive an alternative control signal in the form of encoded pulses with a standardized format, from the satellite stations (13, 14 and 15);

– an encoder and decoder (31) in order to encode and decode tha voice signals in the form of encoded pulses in the standardized format;

– second supplementary means for multiplexing and demultiplexing (34) and means (35) for the decoding of the data from a satellite station (13, 14 and 15) in order to decode such data and to control the transmitte-receiver (16 or 17) as a function of such data.

3. The system as claimed in claim 1, characterized in that in order to transmit and receive voice and data signals and to telecontrol the central station (1 through 11) a satellite station comprises:

— an encoder and decoder (55) in order to encode and decode voice signals in the form of encoded pulses in the standardizes format for telephony, coupled with the means (50 and 51) in order to transmit and receive voice signals;

— an interface (58) for the transmission of data, for the conversion of data from a conventional format of data transmission into the standardized format for telephony and vice versa, coupled with the source terminal or the data receiver (53 and 54);

— a keyboard (52) for the input of telecontrol signals;

— a line transmitter-receiver (56) coupled with the encoder-decoder (55), with the data transmission interface (58) and with the keyboard (52) in order to transmit and receive, towards and from the central station (1 through 11), voice and encoded data signals in the standardized format for telephony, and in order to transmit, towards the central station (1 through 11) encoded telecontrol signals in the format standardized for telephony.

4. The system as claimed in claim 3, characterized in that one of the satellite stations (13, 14 and 15) comprises an order transmission device comprising a control lever (48) coupled with an encoder (49) which supplies a binary word as a function of the position of the control lever (48) to the interface (58) for the transmission of data and in that the central station furthermore comprises:

— a voice synthesizer (28) in order to generate predetermined orders, in the form of a voice signal, controlled by the decoding means (4) for the telecontrol signals;

— an encoder (29) for encoding this voice signal in the form of encoded pulses in accordance with the standardized format;

— supplementary means (27) for the multiplexing and demultiplexing of this voice signal encoded in this manner in order to transmit the signal to at least one of the satellite stations (13, 14 and 15).

5. The system as claimed in claim 1, characterized in that each satellite station (13, 14 and 15) is coupled with the central station (1 through 11) by a bifilar line (42, 43 and 44) transmitting the electric signals, representing the encoded pulses, in both dreictions and supplying the satellite station (13, 14 and 15) with power.

6. The system as claimed in claim 1, characterized in that each satellite station (13, 14 and 15) is coupled with the central station (1 through 11) by a pair of optic light guides respectively in each direction of the encoded pulses.

1/2 Fig.1

2/2

Fig.2